# EUROPEAN PATENT SPECIFICATION

(11) **EP 0 310 393 B1**
(45) Date of publication and mention of the grant of the patent: **18.01.1995**
(21) Application number: 88309049.0
(22) Date of filing: 29.09.1988
(51) Int. Cl.: C08L 23/02, C08K 5/00

(54) **Olefin polymer compositions for use with water systems**
Olefin-Polymer-Zusammensetzungen für Wasserleitungssysteme
Compositions d'un polymère d'oléfine pour application dans la plomberie

(30) Priority: 30.09.1987 US 103247
(43) Date of publication of application: 05.04.1989
(73) Proprietor: SHELL OIL COMPANY, Houston Texas 77002 (US); MITSUI PETROCHEMICAL INDUSTRIES, LTD., Tokyo 100 (JP)
(72) Inventor: Hayden, Earl E., Katy Texas 77450 (US)
(74) Representative: Cresswell, Thomas Anthony

(56) References cited:
- EP-A- 0 048 594
- EP-A- 0 124 664
- EP-A- 0 250 076
- BE-A- 904 840
- US-A- 3 553 158
- US-A- 4 576 983
- PATENT ABSTRACTS OF JAPAN, vol. 9, no. 278 (C-312)[2001], 6th November 1985;& JP-A-60 124 642

## Description

The present invention relates to an improved olefin polymer composition resistant to ultraviolet light deterioration and useful in chlorinated and non-chlorinated, potable and non-potable water systems wherein the water temperatures can range from 0°C to 100°C.

Olefin polymer compositions, particularly butene-1 polymer compositions, have been used for many applications. It has been found that for many end uses it is essential to combine the polymer with antioxidants and ultraviolet (UV) stabilizers in order to develop a resin composition capable of withstanding a variety of conditions, such as heat, oxygen, UV radiation, chlorinated water, or water with a temperature higher than room temperature (see US-A-4576983 and EP-A-124664). A polymer composition has long been needed which is resistant to deterioration when exposed to hot oxygenated water having a temperature in the range of 23°C to 100°C, chlorinated water, and UV radiation. A need has also existed for the same composition to be usable in cool water systems, at temperatures of 0°C to 23°C. The present invention with an unusual blend of components meets this need and is a significant improvement in the art.

The present invention relates to a butene-1 polymer composition having improved resistance to deterioration when exposed to hot oxygenated water with a temperature of 0°C to 100°C, chlorinated water, and UV radiation. The composition of the invention can be used for: hot water systems, cold water systems, for production of pipes, for production of articles associated with a water system, a coating on an article that may be exposed to moisture, such as wire and cable coatings, as well as other similar end uses.

According to the invention there is provided an olefin polymer composition consisting of a blend of:
(a) 93 to 99.5, preferably 95.5 to 99.5 percent by weight of an isotactic butene-1 homopolymer or copolymer;
(b) 0.05 to 0.50, preferably 0.10 to 0.40, especially 0.15 to 0.3, percent by weight of a hindered amine UV stabilizer;
(c) 0.05 to 1.1, preferably 0.1 to 0.9, especially 0.4 to 0.75, percent by weight of at least one hindered phenolic thermal stabilizer having a molecular weight above 530 selected from 1,3,5-trimethyl-2,4,6-tris(3,5-di-tert-butyl-4-hydroxy-benzyl) benzene, octadecyl 3,5-di-tert-butyl-4-hydroxyhydrocinnamate, tetrakis [methylene-(3,5-di-tert-butyl-4-hydroxy-hydro-cinnamate)]methane, 1,3,5-tris(4-tert-butyl-3-hydroxy-2,6-dimethylbenzyl)-1,3,5-triazine-2,4,6-(1H,3H,5H)-trione, bis-[3,3-bis-(4'hydroxy-3'-tert-butyl-phenyl)-butanoic acid]-glycol-ester and tris(3,5- di-t-butyl-4-hydroxybenzyl)isocyanurate;
(d) up to 0.5, preferably 0.05 to 0.4, especially 0.1 to 0.2, percent by weight of a nucleating agent;
(e) up to 4, preferably 0 to 3, especially 0.2 to 2, percent by weight of a pigment;
(f) up to 3.0, preferably 0 to 2, especially 0.5 to 1.5, percent by weight of a filler; and
(g) a positive amount up to 3.0, preferably >0 to 2, especially 0.1 to 0.2, percent by weight of at least one chelating agent selected from:
   2,2'oxamidobis-ethyl 3-(3,5-di-t-butyl-4-hydroxy-phenyl) propionate, N'N'-bis[3-(3,5-di-tert-butyl-4-hydroxy-phenyl)]propanyl hydrazine, calcium bis(mono-ethyl (3,5-di-tert-butyl-4-hydroxy-benzyl) phosphonate, and tris(2-t-butyl-4-(2-methyl-4-hydroxy-5-t-butylphenylthio)-5-methyl)phenylphosphite.

The invention also relates to pipes for carrying optionally chlorinated water, including hot water e.g. 23° to 100°C, and to wire and cable coatings fabricated from the polymer composition of the invention. The composition of the invention is particularly useful when used to fabricate pipes to carry cool water, e.g. water at 0° to 23°C. In these situations it is preferred to use phthalocynaine blue as the pigment.

The hindered amine (b) is preferably a polymer of N,N'-bis-(2,2,6,6-tetramethyl-4-piperidinyl)-1,6-hexane diamine, 2,4,6-trichloro-1,3,5-triazine and 2,4,4-trimethyl-2-aminopentane.

The nucleating agent (d) is preferably a polyethylene, especially a high density polyethylene. The pigment (e) is preferably at least one of phthalocynaine blue, carbon black, iron oxide and titanium oxide. The filler (f) preferably is a magnesium silicate, especially talc, coated with a metal stearate.

The butene-1 polymer composition of the invention has an excellent balance of properties not available in prior art formulations.

The isotactic butene-1 homopolymers or copolymers are preferably suitably crystallizable thermoplastic butene-1 polymers with a number average molecular weight above 15,000, preferably above 20,000, and an isotactic content above 85%, preferably above 90%, and most preferably above 95%, as determined by conventional methods.

Suitable isotactic butene-1 homopolymers and copolymers are commercially available from the Shell Oil Company and methods for their preparation are well known in the art (see US-A-3,362,940). Illustrative of butene-1 polymers suitable for use in the present invention are those known in the industry as pipe grades. Particularly preferred are Shell butene-1 homopolymers.

Suitable hindered amine ultraviolet (UV) stabilizers are disclosed in Japanese Patent No. Sho 60[1985]-124642 and in Japanese Patent No. Sho 60[1985]-130635 and have at least one of the following general formulas: 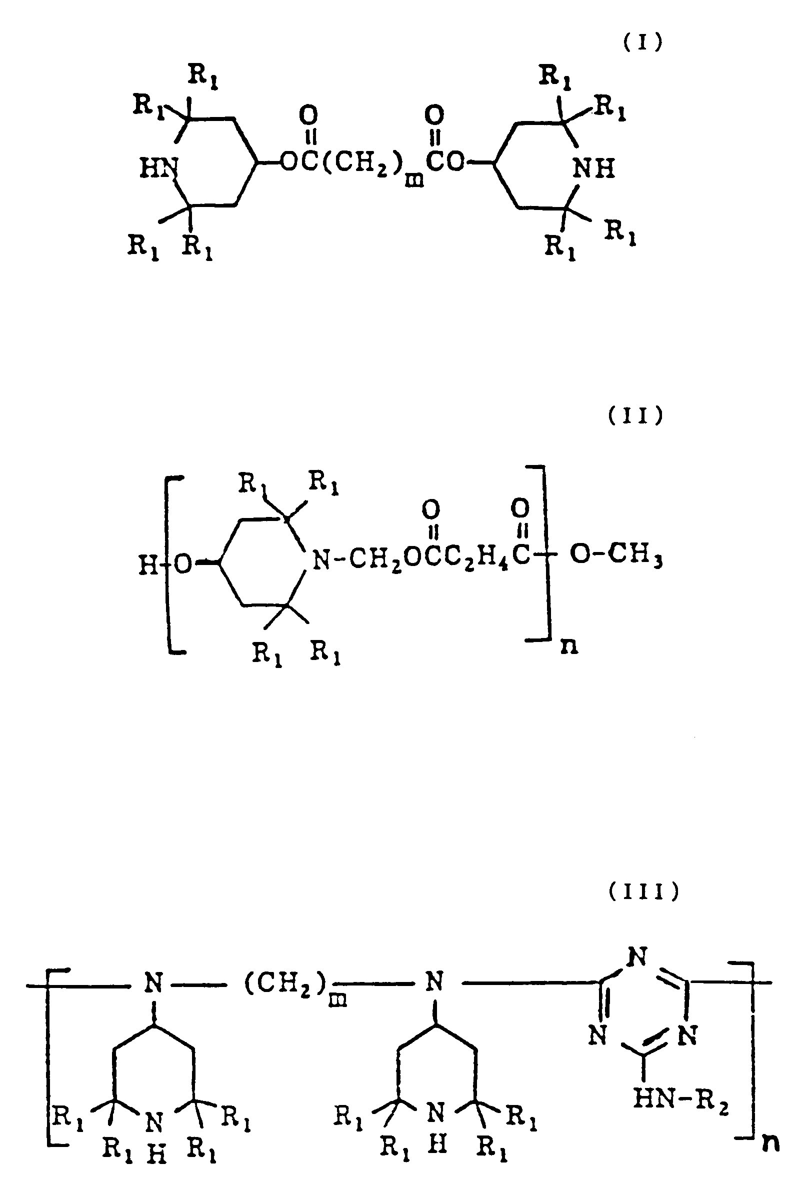
where R₁ and R₂ refer to alkyl groups containing 1-18 and 1-8 carbon atoms respectively; m and n are integers of 0-30 and 1-40 respectively.

A particular hindered amine which can be used within the scope of this invention is a polymer of N,N'-bis(2,2,6,6-tetramethyl-4-piperidinyl)-1,6-hexane diamine, 2,4,6-trichloro-1,3,5-triazine and 2,4,4-trimethyl-2-amino-pentane (described by Ciba-Geigy Corporation as 2,4,4-trimethyl-1,2-pentanamine).

The most preferred hindered amines for use within the scope of this invention are represented by general formula (III), wherein R₁ represents a methyl group, R₂ represents an optionally amino substituted alkyl group containing up to 8 carbon atoms (preferably propyl, C₅ alkyl or 2,4,4-trimethylpent-2-yl), n is an integer of at least 4, preferably 4 or 5, and m is the integer 6. Preferred hindered amines are "Tinuvin" 720 (of Formula I), "Tinuvin" 622 LD (of Formula II) and "Chimassorb" 944 (of Formula III) and are commercially available from Ciba-Geigy Corporation ("Tinuvin" and "Chimassorb" are Registered Trade Marks). Chimassorb is usually used as a light stabilizer. However, in this context, the Chimassorb is being used as a thermal stabilizer.

A hindered phenolic stabilizer/antioxidant is used herein. Numerous hindered phenolic stabilizers which would work in the present inventive blend are described in JP-A-59[1984]-221344. Particular high molecular weight hindered phenolic stabilizers which work well within the scope of the present invention include "Ethanox" (Registered Trade Mark) 330 which is 1,3,5-trimethyl-2,4,6-tris(3,5-di-tert-butyl-4-hydroxybenzyl)benzene, "Irganox" (Registered Trade Mark) 1706 which is octadecyl 3,5-di-tert-butyl-4-hydroxyhydro-cinnamate, "Irganox" 1010 which is tetrakis [methylene(3,5-di-tert-butyl-4-hydroxy-hydro-cinnamate)]methane, "Cyanox" (Registered Trade Mark) 1790 which is 1,3,5-tris(4-tert-butyl-3-hydroxy-2,6-dimethylbenzyl)-1,3,5-triazine-2,4,6-(1H,3H,5H)-trione, "Hostanox" (Registered Trade Mark) 03 which is bis-[3,3-bis(4′hydroxy-3′tert-butylphenyl)-butanoic acid]-glycolester and "Goodrite" (Registered Trade Mark) 3114 which is tris(3,5-di-t-butyl-4-hydroxy-benzyl)iso-cyanurate;

"Ethanox" 330 (molecular weight 775) is available from the Ethyl Corporation, "Irganox" 1076 (molecular weight 531) and "Irganox" 1010 (molecular weight 1178) are available from Ciba-Geigy Corporation. "Cyanox" 1790 (molecular weight 700) is available from American Cyanamid Corporation. "Hostanox" 03 (molecular weight 790) is available from American Hoechst Corporation and "Goodrite" 3114 (molecular weight 785) now known as "Irganox" 3114 is currently available from Ciba-Geigy Corporation.

The nucleating agent useful within the scope of the present invention can be a member of the group consisting of:
high density polyethylene,
graphitic non-turbostatic carbon;
fatty acid amides;
anthraquinones; and
amides.

A variety of preferred nucleating agents, preferred pigments and preferred fillers, contemplated for use in this invention are detailed in US-A-4,576, 983.

Other nucleating agents contemplated for use in this invention include graphitic non-turbostatic carbon nucleating agents, disclosed in US-A-4,321,334 and fatty acid amide nucleating agents disclosed in 4,322,503. These fatty acid amides include N,N′-ethylene-bis-stearamide. Specific anthraquinones include 1,2-dihydroxy-9-10-anthraquinone; 1,4-dihydroxy-9, 10-anthraquinone; 1,5-dihydroxy-9,10-anthraquinone; 12,5,8-tetrahydroxy-9-10-anthraquinone; 9,10-anthraquinone; and sodium 2-anthraquinone sulfonate. Other amide nucleating agents are disclosed in US-A-4,320,209. Preferred amides include 1-naphthalene acetamide; N-stearoyl-p-aminophenol; mercapto-n-2-naphthyl-acetamide; malonamide; nicotinamide; isonicotinamide; and 1,8-naphthalamide.

The most preferred nucleating agent is high density polyethylene. The high density polyethylene (HDPE) employed in the composition of this invention is characterized by a density above 0.93 g/cm³ and preferably at least 0.95g/cm³. An HDPE with a melt index of from 0.1 to 20, as measured by ASTM D1238, Condition E, is typically employed; HDPE of higher melt index may also be suitable. The melt index and molecular weight of HDPE are inversely related; the corresponding molecular weight for a polymer with a given melt index may be readily determined by routine experiment. A particularly suitable HDPE, for example, has a melt index of 0.45 g/10 min., a weight average molecular weight of about 166,000 and a density of 0.950 grams/cm³. A high density polyethylene with a viscosity at mixing temperatures approximating that of the butene-1-homopolymer facilitates intimate mixing in conventional extrusion compounding equipment. A wide variety of suitable high density polyethylenes are commercially available and methods for their preparation are well known in the art. They may be prepared by polymerization processes employing Ziegler-type coordination catalysts or supported chromium oxide catalysts. Commercially available HDPE of either type is suitable.

The filler component employed in this invention is preferably a coated mineral filler, in particular a magnesium silicate coated with an acid acceptor. The preferred magnesium silicate is talc. The acid acceptors which are coated on the mineral filler are preferably stearates of weak bases, such as alkaline earth metal stearates. A preferred acid acceptor is zinc stearate. Accordingly, the preferred filler component is zinc stearate-coated talc. Such minerals are well known, commercially available fillers.

In addition to adding certain strength properties to the composition of the invention, the particular fillers employed herein also unexpectedly improve the long term stability of the blends.

Pigments are added as desired to achieve a particular color for the resin. Typical pigments useful within the scope of the invention include carbon black, titanium dioxide, phthalocyanine blue, iron oxide and mixtures thereof.

The polymer compositions of the invention contain at least one chelating agent to provide resistance to deterioration in the presence of copper, such as copper wire. These chelating compounds are commercially available as follows:-
(a) 2,2'-oxamidobis-ethyl 3-(3,5-di-t-butyl-4-hydroxy-phenyl) propionate is "Naugard" XL-1 made by Uniroyal;
(b) N'N'-bis[3-(3',5'di-tert-butyl-4-hydroxyphenyl)]propanyl-hydrazine is "Irganox" 1024 made by Ciba Geigy;
(c) calcium bis(mono-ethyl(3,5-di-tert-butyl-4-hydroxy-benzyl)phosphonate) is "Irganox" 1425 made by Ciba Geigy; and
(d) tris(2-t-butyl-4-(2-methyl-4-hydroxy-5-t-butylphenylthio)-5-methyl)phenylphosphite is VP OSP 1 made by Hoechst.

Of these the most preferred is "Irganox" 1024, while the second choice is "Naugard" XL 1.

The chelating agent is a positive amount of up to 3 percent by weight, preferably up to 2 percent by weight, and especially 0.1 to 0.2 by weight, of the composition.

The relative amounts of each of the various ingredients in the polymer composition of the present invention, are listed below in percent by weight (the total for a particular composition adding up to 100 percent):

| COMPONENT | EX1 | EX2 | EX3 |
|---|---|---|---|
| butene-1 homopolymer, or copolymer | 93-99.5 | 93-99.5 | 95-99.5 |
| hindered amine | 0.05-0.5 | 0.10-0.4 | 0.15-0.3 |
| at least one hindered phenolic stabilizer | 0.05-1.1 | 0.05-0.9 | 0.05-0.75 |
| nucleating | 0-0.5 | 0.05-0.4 | 0.1-0.2 |
| pigment | 0-4 | 0-3 | 0-2 |
| filler | 0-3 | 0-2 | 0.5-1.5 |
| chelating agent | >0-3 | >0-2 | 0.1-0.2 |

The relative amounts of the hindered amine and hindered phenolic component are significant to stabilize the resulting composition, that is to provide both heat resistance to temperatures from 0°C to 100°C, and more preferably from 23°C to 100°C, UV resistance, chlorine resistance and processing stability due to the synergistic effects of these interacting components. The relative amount of the chelating agent component is significant to stabilize against deterioration in the presence of metals, especially copper.

In the preferred embodiment, the various ingredients are blended or intimately mixed in an intensive mixing device, such as a C.W. Brabender Mixer/Measuring Head or a Banbury-type mixer. The resulting blends have particular utility for carrying pressurized hot water in view of the long-term pressure capability of the resin and improved resistance to a loss of polymer properties resulting from heat, oxygenated hot water, aqueous chlorine destabilization and ultraviolet radiation. An important feature for a water carrying polymer is that the combination of ingredients that is used must not leach into the water supply. The combination chosen here is very resistant to leaching particularly in the presence of aqueous chlorine in hot water. The present invention also operates in cool water, defined as water in the temperature range of 0°C to 23°.

The invention is further illustrated by reference to the following Example.

### EXAMPLE

In this Example, eight formulations F1 to F8 were prepared using the following combinations of ingredients in parts by weight:

| COMPONENT | F1 | F2 | F3 | F4 | F5 | F6 | F7 | F8 |
|---|---|---|---|---|---|---|---|---|
| PB (BR-200)* | 99.03 | 98.73 | 98.73 | 99.03 | 98.73 | 96.328 | 96.328 | 96.328 |
| Chimassorb 944 | 0.15 | 0.25 | 0.40 | 0.15 | 0.25 | 0.30 | 0.30 | 0.30 |
| Ethanox 330 | 0.30 | 0.40 | 0.25 | 0.30 | 0.40 | 0.20 | -- | -- |
| Irganox 1076 | 0.15 | 0.25 | 0.25 | -- | -- | -- | 0.20 | -- |
| Irganox 1010 | -- | -- | -- | 0.15 | 0.25 | -- | -- | 0.20 |
| High density polyethylene | 0.10 | 0.10 | 0.10 | 0.10 | 0.10 | 0.10 | 0.20 | 0.20 |
| Titanium dioxide | 0.25 | 0.25 | 0.25 | 0.25 | 0.25 | 1.70 | 1.70 | 1.70 |
| Carbon black | 0.008 | 0.008 | 0.008 | 0.008 | 0.008 | 0.006 | 0.006 | 0.006 |
| Zinc oxide | 0.012 | 0.012 | 0.012 | 0.012 | 0.012 | 0.012 | 0.012 | 0.012 |
| ZSC talc** | -- | -- | -- | -- | -- | 1.20 | 1.20 | 1.20 |
| Chelating agent*** | 0.20 | 0.20 | 0.20 | 0.20 | 0.20 | 0.20 | 0.20 | 0.20 |

| | | | | | | | | |
|---|---|---|---|---|---|---|---|---|
| *PB (BR-200) represents a particular polybutylene resin available from Shell. | | | | | | | | |
| **ZSC talc is zinc stearate coated talc. | | | | | | | | |
| ***Chelating agent - Irganox 1024. | | | | | | | | |

The various formulations are prepared by mixing the ingredients in a Brabender-type mixing head at 210°C at 60 RPM for five minutes under nitrogen purge in order to avoid oxidative degradation. Each resin is then compression-molded into 1.5 mm (60 mil) thick plaque. After transformation in at least 10 days to a stable hexagonal crystal form I of polybutylene (PB), the plaques are tested by exposure to hot water (100°C) containing 25 ppm of oxygen. The tests are performed in a stainless steel cylinder filled with tap water 2.54 cm (1 inch) from the top. The samples are inserted into the cylinder which is then sealed. The temperature of the cylinder is brought up to operation temperature by a silicone oil bath. As the cylinder temperature increases to the set temperature, 100 cm³/min of oxygen is bubbled through the test water at a pressure of 0.17 MPa gauge (25psig). When the cylinder reaches the set temperature oxygen is bubbled at the rate of 300 cm³/min. This brings the dissolved oxygen content to the desired level for testing. After the three hours the flow of oxygen is turned off and a 0.17 MPa gauge (25 psig) head pressure is maintained. The samples are visually inspected once a week for signs of plaque failure.

| **FORMULATION** | **F1** | **F2** | **F3** | **F4** | **F5** | **F6** | **F7** | **F8** |
|---|---|---|---|---|---|---|---|---|
| Days to fail | 53 | 66 | 66 | 66 | 40 | 40 | 32 | 19 |

These results show that formulations in accordance with the invention are capable of withstanding hot oxygenated water for prolonged periods. The purpose of adding the chelating agent is to protect the polymer from reaction with metal ions and prevent a decrease in the oxidative stability of the overall formulation.

## Claims

1. An olefin polymer composition consisting of a blend of:
(a) 93 to 99.5 percent by weight of an isotactic butene-1 homopolymer or copolymer;
(b) 0.05 to 0.50 percent by weight of a hindered amine UV stabilizer;
(c) 0.05 to 1.1 percent by weight of at least one hindered phenolic thermal stabilizer having a molecular weight above 530 selected from 1,3,5-trimethyl-2,4,6-tris(3,5-di-tert-butyl-4-hydroxy-benzyl)-benzene, octadecyl 3,5-di-tert-butyl-4-hydroxyhydrocinnamate, tetrakis[methylene(3,5-di-tert-butyl-4-hydroxyhydrocinnamate)]-methane, 1,3,5-tris(4-tert-butyl-3-hydroxy-2,6-dimethylbenzyl)-1,3,5-triazine-2,4,6-(1H,3H,5H)-trione, bis-[3,3-bis(4'hydroxy-3'tert-butyl-phenyl)-butanoic acid]-glycolester and tris(2,5-di-t-butyl-4-hydroxybenzyl) isocyanurate;
(d) up to 0.5 percent by weight of a nucleating agent;
(e) up to 4 percent by weight of a pigment;
(f) up to 3.0 percent by weight of a filler; and
(g) a positive amount up to 3.0 percent by weight of at least one chelating agent selected from:
2,2'-oxamidobis-ethyl 3-(3,5-di-t-butyl-4-hydroxyphenyl)propionate, N'N'-bis[3-(3,5-di-tert-butyl-4-hydroxyphenyl)]propanyl hydrazine, calcium bis(mono-ethyl (3,5-di-tert-butyl-4-hydroxy-benzyl) phosphonate, and tris(2-t-butyl-4-(2-methyl-4-hydroxy-5-t-butylphenylthio)-5-methyl)phenylphosphite.

2. A composition according to claim 1 wherein the relative amounts of each component are:
(a) 95.5 to 99.5 percent by weight;
(b) 0.10 to 0.40 percent by weight;
(c) 0.10 to 0.90 percent by weight;
(d) 0.05 to 0.4 percent by weight;
(e) 0 to 3 percent by weight;
(f) 0 to 2 percent by weight; and
(g) >0 to 2.0 percent by weight.

3. A composition according to claim 2 wherein the relative amount of each component are:
(a) 95.5 to 99.5 percent by weight;
(b) 0.15 to 0.3 percent by weight;
(c) 0.4 to 0.75 percent by weight;
(d) 0.1 to 0.2 percent by weight;
(e) 0.2 to 2 percent by weight;
(f) 0.5 to 1.5 percent by weight; and
(g) 0.1 to 0.2 percent by weight.

4. A composition according to any one of the preceding claims wherein (b) is a polymer of N, N'-bis(2,2,6,6-tetramethyl-4-piperidinyl)-1,6-hexane diamine, 2,4,6-trichloro-1,3,5-triazine and 2,4,4-trimethyl-2-aminopentane.

5. A composition according to any one of the preceding claims wherein (d) is a high density polyethylene.

6. A composition according to any one of the preceding claims wherein (e) is at least one of carbon black, iron oxide yellow, phthalocyanine blue and titanium dioxide.

7. A composition according to any one of the preceding claims wherein (f) is a magnesium silicate coated with a metal stearate.

8. A composition according to claim 7 wherein (f) is a talc coated with zinc stearate.

9. Pipes for carrying water fabricated from a composition as claimed in any one of the preceding claims.

10. Wire or cables coated with a composition as claimed in any one of claims 1 to 8.

## Patentansprüche

1. Olefinpolymermasse, bestehend aus einem Gemisch aus
(a) 93 bis 99,5 Gew.-% eines isotaktischen Buten-1-Homopolymers oder -Copolymers;
(b) 0,05 bis 0,50 Gew.-% eines (sterisch) gehinderten Amin-UV-Stabilisators;
(c) 0,05 bis 1,1 Gew.-% mindestens eines Stabilisators mit endständigem gehindertem Phenol mit einem Molekulargewicht größer 530, ausgewählt aus 1,3,5-Trimethyl-2,4,6-tris(3,5-di-tert-butyl-4-hydroxybenzyl)benzol, Octadecyl-3,5-di-tert-butyl-4-hydroxyhydrocinnamat, Tetrakis[methylen(3,5-di-tert-butyl-4-hydroxyhydrocinnamat)]-methan, 1,3,5-Tris(4-tert-butyl-3-hydroxy-2,6-dimethylbenzyl)-1,3,5-triazin-2,4,6-(1H,3H,5H)trion, Bis-[3,3-bis(4'-hydroxy-3'-tert-butylphenyl)buttersäure]glykolester und Tris(2,5-di-tert-butyl-4-hydroxybenzyl)-isocyanurat;
(d) bis zu 0,5 Gew.-% eines Kernbildungsmittels;
(e) bis zu 4 Gew.-% eines Pigments;
(f) bis zu 3,0 Gew.-% eines Füllstoffs und
(g) eine positive Menge bis zu 3,0 Gew.-% mindestens eines Chelatierungsmittels, ausgewählt aus 2,2'-Oxamidobis-ethyl-3-(3,5-di-tert-butyl-4-hydroxyphenyl)propionat, N'N'-Bis[3-(3,5-di-tert-butyl-4-hydroxyphenyl)]-propanylhydrazin, Calcium-bis(monoethyl-(3,5-di-tert-butyl-4-hydroxybenzyl)phosphonat) und Tris(2-tert-butyl-4-(2-methyl-4-hydroxy-5-tert-butylphenylthio)-5-methyl)phenylphosphit.

2. Masse nach Anspruch 1, wobei die relativen Mengen jeder Komponente wie folgt sind:
(a) 95,5 bis 99,5 Gew.-%,
(b) 0,10 bis 0,40 Gew.-%,
(c) 0,10 bis 0,90 Gew.-%,
(d) 0,05 bis 0,4 Gew.-%,
(e) 0 bis 3 Gew.-%,
(f) 0 bis 2 Gew.-% und
(g) >0 bis 2,0 Gew.-%.

3. Masse nach Anspruch 2, wobei die relativen Mengen jeweils wie folgt sind:
(a) 95,5 bis 99,5 Gew.-%,
(b) 0,15 bis 0,3 Gew.-%,
(c) 0,4 bis 0,75 Gew.-%,
(d) 0,1 bis 0,2 Gew.-%,
(e) 0,2 bis 2 Gew.-%,
(f) 0,5 bis 1,5 Gew.-% und
(g) 0,1 bis 0,2 Gew.-%.

4. Masse nach einem der vorangehenden Ansprüche, wobei (b) ein Polymer von N,N'-Bis(2,2,6,6-tetramethyl-4-piperidinyl)-1,6-hexandiamin, 2,4,6-Trichlor-1,3,5-triazin und 2,4,4-Trimethyl-2-aminopentan ist.

5. Masse nach einem der vorangehenden Ansprüche, wobei (d) ein Polyethylen hoher Dichte ist.

6. Masse nach einem der vorangehenden Ansprüche, wobei (e) Ruß, Eisenoxidgelb, Phthalocyaninblau und/oder Titandioxid ist.

7. Masse nach einem der vorangehenden Ansprüche, wobei (f) ein Magnesiumsilicat ist, das mit einem Metallstearat überzogen ist.

8. Masse nach Anspruch 7, wobei (f) mit Zinkstearat überzogenes Talkum ist.

9. Rohre zum Durchleiten von Wasser, hergestellt aus einer Masse nach einem der vorangehenden Ansprüche.

10. Drähte oder Kabel, überzogen mit einer Masse nach einem der Ansprüche 1 bis 8.

## Revendications

1. Composition de polyoléfines constituée d'un mélange de :
(a) de 93 à 99,5 % en poids d'un homopolymère ou copolymère isotactique de butène-1,
(b) de 0,05 à 0,50 % en poids d'un stabilisant anti-UV de type amine à encombrement stérique important,
(c) de 0,05 à 1,1 % en poids d'au moins un stabilisant thermique phénolique à encombrement stérique important ayant une masse moléculaire supérieure à 530 choisi parmi le 1,3,5-triméthyl-2,4,6-tris-(3,5-di-*t*-butyl-4-hydroxybenyl)-benzène, le 3,5-di-*t*-butyl-4-hydroxyhydrocinnamate d'octadécyle, le tétrakis[méthylène-(3,5-di-*t*-butyl-4-hydroxyhydrocinnamate)]méthane, la 1,3,5-tris-(4-*t*-butyl-3-hydroxy-2,6-diméthylbenyl)-1,3,5-triazine-2,4,6-(1H,3H,5H)-trione, le bis-[3,3-bis-(4'hydroxy-3't-butylphényl)butanoate de glycol et le cyanurate de tris-(2,5-di-*t*-butyl-4-hydroxybenzyle)
(d) jusqu'à 0,5 % en poids d'un agent de nucléation,
(e) jusqu'à 4 % en poids d'un pigment,
(f) jusqu'à 3,0 % en poids d'une charge, et
(g) une quantité déterminée allant jusqu'à 3,0 % en poids d'au moins un agent chélatant choisi parmi
le 3-(3,5-di-*t*-butyl-4-hydroxyphényl)propionate de 2,2'-oxamidobiséthyle, la N',N'-bis[3(3,5-di-*t*-butyl-4-hydroxyphényl)propanylhydrazine, le bis-(mono-éthyl(3,5-di-*t*-butyl-4-hydroxybenzyl)phosphonate de calcium et le tris(2-t-butyl-4-(2-méthyl-4-hydroxy-5-*t*-butylphénylthio-5-méthyl)phénylphosphite.

2. Composition conforme à la revendication 1 dans laquelle les quantités relatives de chaque composant sont :
(a) de 95,5 à 99,5 % en poids,
(b) de 0,1 à 0,40 % en poids,
(c) de 0,10 à 0,90 % en poids,
(d) de 0,05 à 0,4 % en poids,
(e) de 0 à 3 % en poids,
(f) de 0 à 2 % en poids,
(g) > 0 à 2,0 % en poids.

3. Composition conforme à la revendication 2 dans laquelle les quantités relatives de chaque composant sont :
(a) de 95,5 à 99,5 % en poids,
(b) de 0,15 à 0,30 % en poids,
(c) de 0,4 à 0,75 % en poids,
(d) de 0,1 à 0,2 % en poids,
(e) de 0,2 à 2 % en poids,
(f) de 0,5 à 1,5 % en poids,
(g) de 0,1 à 0,2 % en poids.

4. Composition conforme à une quelconque des revendications précédentes dans laquelle (b) est un polymère de N,N'-bis(2,2,6,6-tétraméthyl-4-pipéridinyl)1,6-hexanediamine, 2,4,6-trichloro-1,3,5-triazine et 2,4,4-triméthyl-2-aminopentane.

5. Composition conforme à une quelconque des revendications précédentes dans laquelle (d) est un polyéthylène haute densité.

6. Composition conforme à une quelconque des revendications précédentes dans laquelle (e) est au moins un des composés suivants : noir de carbone, le jaune d'oxyde de fer, le bleu de phtalocyanine et le dioxyde de titane.

7. Composition conforme à une quelconque des revendications précédentes dans laquelle (f) est du silicate de magnésium enrobé de stéarate de métal.

8. Composition conforme à la revendication 7 dans laquelle (f) est du talc enrobé de stéarate de zinc.

9. Conduites d'eau fabriquées à partir d'un composition conforme à une quelconque des revendications précédentes.

10. Fils ou cables enrobés avec une composition conforme à une quelconque des revendications 1 à 8.
